Europäisches Patentamt

**European Patent Office**

**Office européen des brevets**

(11) Numéro de publication: **0 208 571**
**A1**

## (12) DEMANDE DE BREVET EUROPEEN

(21) Numéro de dépôt: **86401194.5**

(22) Date de dépôt: **04.06.86**

(51) Int. Cl.⁴: **G 06 F 3/02**
**G 07 C 11/00**

(30) Priorité: **07.06.85 FR 8508609**

(43) Date de publication de la demande:
**14.01.87 Bulletin 87/3**

(84) Etats contractants désignés:
**BE DE GB IT NL SE**

(71) Demandeur: **FLONIC S.A.**
**12, Place des Etats-Unis**
**F-92120 Montrouge(FR)**

(72) Inventeur: **Berthon, Patrick**
**4 Bis, rue Delavelle**
**F-25000 Besancon(FR)**

(74) Mandataire: **Dronne, Guy**
**Giers Schlumberger 12 Place des Etats-Unis B.P. 121**
**F-92124 Montrouge(FR)**

(54) **Procédé d'établissement d'un procès verbal de véhicule en stationnement irrégulier et dispositif portatif pour la mise en oeuvre dudit procédé.**

(57) L'invention concerne un terminal portable pour l'établissement de procès-verbal de véhicules en stationnement irrégulier.

Le terminal comprend un microprocesseur principal (18) et sa mémoire associée (21), un clavier (12) d'introduction d'informations, une base de temps (24) et des moyens d'affichage (16). La mémoire (21) comprend des programmes et des tables de données pour aider l'introduction des paramètres du procès-berbal et pour contrôler l'exactitude de certains paramètres introduits.

FIG. 2

EP 0 208 571 A1

## PROCEDE D'ETABLISSEMENT D'UN PROCES-VERBAL DE VEHICULE EN STATIONNEMENT IRREGULIER ET DISPOSITIF PORTATIF POUR LA MISE EN OEUVRE DUDIT PROCEDE

La présente invention concerne un procédé d'établissement d'un procès-verbal de véhicule en stationnement irrégulier et un dispositif portatif pour la mise en oeuvre dudit procédé.

De façon plus précise, la présente invention se rapporte à un procédé et à un dispositif qui permettent de mémoriser la totalité des informations nécessaires pour dresser un procès-verbal de stationnement irrégulier d'un véhicule sous une forme telle qu'elles puissent aisément être traitées par des moyens informatiques qui eux établiront effectivement le procès-verbal. Ces informations sont en général le numéro d'immatriculation du véhicule, la marque du véhicule, le lieu, l'heure et la date de la constatation du stationnement irrégulier, le motif de la verbalisation.

On sait que le stationnement règlementé, et en particulier le stationnement payant pour les véhicules automobiles en voierie, s'est beaucoup développé, notamment dans les grandes agglomérations. Quel que soit le type de borne de stationnement utilisé, il est nécessaire que des préposés à la surveillance du stationnement effectuent des rondes pour détecter les véhicules en stationnement non règlementaire, à partir des indications fournies directement ou indirectement par les bornes de stationnement en vue de dresser un procès-verbal d'infraction lorsque cela est nécessaire.

Il en va de même pour le stationnement règlementé non payant. L'expérience montre que la technique actuelle qui consiste pour l'agent à remplir manuellement des imprimés à l'aide des informations relevées nécessaires pour dresser le procès-verbal présente deux inconvénients majeurs pour l'organisme de surveillance. D'une part le relevé et l'inscription de toutes ces données sont relativement longs. D'autre part il peut se glisser un certain nombre d'erreurs parmi les informations relevées, erreurs qui rendront en fait le procès-verbal inexploitable, par exemple s'il y a non concordance entre le numéro d'immatriculation relevé et la marque du véhicule, ou erroné s'il y a une erreur dans l'inscription de l'heure et de la date auxquelles le procès-verbal est dressé.

Pour remédier à ces inconvénients, un objet de l'invention est de fournir un procédé et un dispositif qui permettent à l'agent verbalisateur de relever rapidement toutes les informations requises pour dresser le procès-verbal et de supprimer ou de réduire considérablement les risques d'erreurs dans le relevé de ces informations.

Pour atteindre ce but, le procédé selon l'invention comprend les étapes suivantes :

.Pour chaque véhicule en stationnement irrégulier :
relever le numéro d'immatriculation d'un véhicule en stationnement irrégulier ;
introduire dans la mémoire d'un dispositif portable ledit numéro d'immatriculation ;
introduire dans ladite mémoire d'autres informations relatives à l'infraction selon un ordre prédéterminé ;

- 3 -

0208571

relever à nouveau le numéro d'immatriculation dudit véhicule ;

introduire le numéro d'immatriculation relevé à nouveau dans ladite mémoire du dispositif portable ;

provoquer par ledit dispositif la comparaison entre les deux numéros effectivement introduits ;

en réponse au résultat de ladite comparaison, supprimer de ladite mémoire l'ensemble des informations introduites si les deux numéros effectivement introduits sont différents, et maintenir dans ladite mémoire l'ensemble desdites informations si les deux numéros sont identiques ; et

.à intervalles, transférer lesdits ensembles d'informations mémorisés relatifs aux véhicules en stationnement irrégulier pendant cette période dans des moyens de traitement pour élaborer les procès-verbaux eux-mêmes.

Le dispositif portatif d'aide à l'établissement de procès-verbaux comprend :

.des moyens pour entrer dans ledit dispositif des informations ;

.des moyens pour mémoriser lesdites informations entrées selon une séquence prédéterminée comprenant une première introduction du numéro d'immatriculation d'un véhicule contrevenant, l'introduction d'autres informations relatives à l'infraction et une deuxième introduction du numéro d'immatriculation dudit véhicule ;

.des moyens pour comparer les numéros d'immatriculation effectivement entrés lors des première et deuxième introduction ;

.des moyens répondant aux moyens de comparaison pour supprimer des moyens de mémorisation l'ensemble desdites informations introduites si les numéros d'immatriculation effectivement entrés sont différents et pour les maintenir si lesdits numéros sont identiques ;

.des moyens d'accès auxdits moyens de mémorisation pour prélever périodiquement les ensembles d'informations maintenus dans lesdits moyens de mémorisation en vue de les traiter pour établir effectivement les procès-verbaux correspondants.

On voit que, ainsi, le relevé des informations nécessaires pour dresser le procès-verbal se fait plus rapidement qu'en remplissant manuellement un formulaire préimprimé et que de, plus, la comparaison faite entre les deux introductions du numéro d'immatriculation du véhicule permet d'éviter ou de réduire considérablement les erreurs lors de la reproduction du numéro d'immatriculation du véhicule contrevenant.

D'autres caractéristiques et avantages de l'invention apparaîtront plus clairement à la lecture de la description qui suit d'un mode de mise en oeuvre de l'invention donné à titre d'exemple non limitatif. La description se réfère au dessin annexé sur lequel :

La figure 1 est une vue simplifiée d'un dispositif portable selon l'invention ; et

La figure 2 est un organigramme expliquant le fonctionnement et l'utilisation du dispositif portable représenté sur la figure 1.

**0208571**

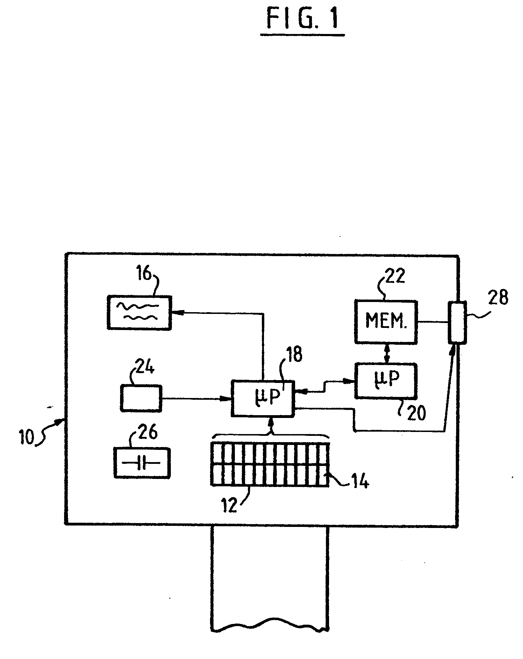

En se référant tout d'abord à la figure 1, on va décrire la structure du dispositif portable qui est référencé 10. Dans la suite de la description, le dispositif 10 sera appelé terminal portable.

Le terminal portable 10 comprend un clavier 12 à touches. Chaque touche 14 correspond à un signe alphanumérique ou à une fonction. Il comprend également un écran de visualisation 16 qui est par exemple du type à cristaux liquides. L'écran permet de faire apparaître deux lignes de 34 caractères.

Le circuit proprement dit du terminal 10 est constitué par un premier microprocesseur 18 pour la gestion des entrées-sorties du terminal 10. Les entrées du microprocesseur 18 sont reliées au clavier d'entrée 12 par un décodeur 19 qui délivre, pour chaque touche 14 activée un signal spécifique qui est appliqué au microprocesseur. Il comporte une mémoire 21 de 16 kilo-octets du type EPROM contenant le programme correspondant et des données de base qui seront explicitées ultérieurement. Le terminal comprend également un deuxième microprocesseur 20 pour l'application particulière et auquel est adjointe une mémoire 22 du type RAM secourue.

Le terminal 10 comprend en outre une base de temps 24, par exemple du type à quartz, délivrant une information de temps présent constituée par l'heure et la date, et une alimentation électrique autonome constituée par une batterie rechargeable 26. Le terminal 10 comprend enfin une borne externe 28 Permettant de relier la mémoire 22 à des moyens informatiques externes pour lire les informations stockées dans la mémoire 22 et les exploiter. Ce terminal est, par exemple, du type développé par la société SOTELEM.

0208571

Pour mieux faire comprendre le fonctionnement du terminal et son utilisation par l'agent chargé de dresser les procès-verbaux de stationnement irrégulier, on va d'abord rappeler les informations qui doivent figurer sur le procès-verbal. Il s'agit du numéro d'immatriculation du véhicule, du lieu du stationnement contrevenant, de la marque du véhicule, du type d'infraction commis, et de l'heure et de la date où l'infraction a été commise. A ces informations obligatoires, on peut ajouter l'indication facultative du type du véhicule.

Si l'on revient au microprocesseur 18, sa mémoire contient un certain nombre de données ou de tableaux de données qui ont pour but de simplifier le travail de l'agent chargé de la verbalisation et de limiter au maximum les risques d'erreurs dans la saisie des informations relatives à un procès-verbal.

La mémoire du microprocesseur 18 contient un tableau de 60 marques usuelles de véhicules automobiles. Elle contient également un tableau de 99 infractions possibles, chaque infraction étant repérée par un nombre à 2 chiffres. Elle contient encore un numéro d'identification du terminal.

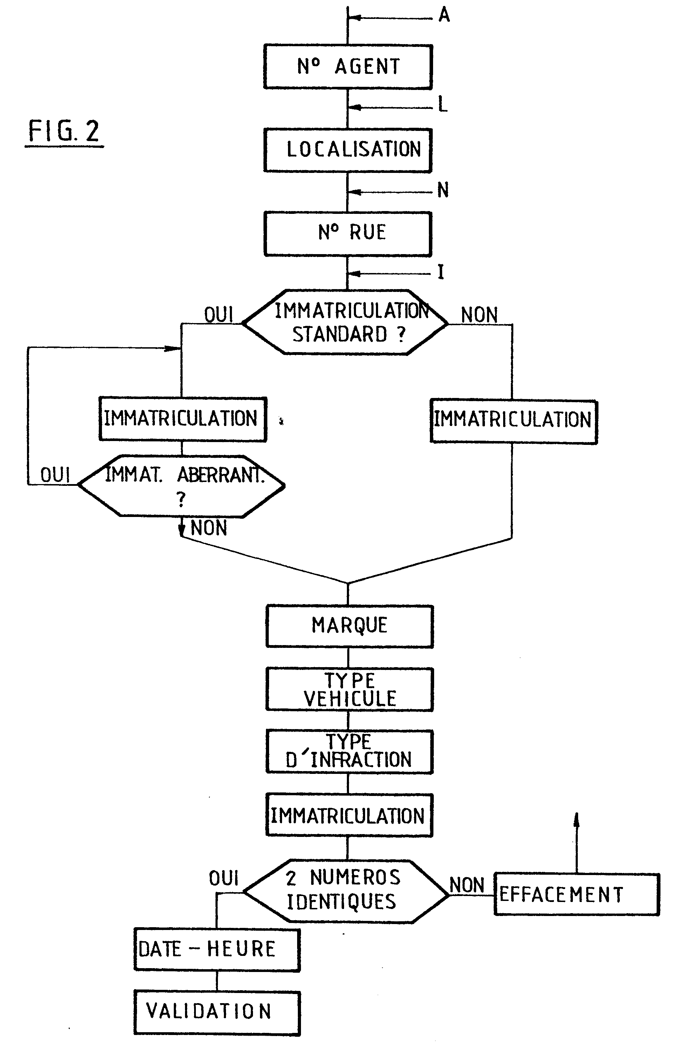

On va maintenant décrire l'utilisation du terminal 10 en se référant à l'organigramme de la figure 2 qui illustre le fonctionnement.

Lorsque l'agent commence sa ronde de surveillance, il introduit, à l'aide du clavier 12, son numéro matricule. Celui-ci apparaît sur l'écran 16, ce qui permet le contrôle de son exactitude. Cette information est stockée dans la mémoire 22.

Lorsque l'agent veut saisir les informations relatives au procès-verbal pour un véhicule en stationnement contrevenant, il introduit les éléments relatifs au lieu de l'infraction. Cette introduction peut se faire en clair à l'aide des touches alphanumériques du clavier 12. Elle peut aussi se faire sous une forme codée en utilisant un signe pour chaque dénomination de voies publiques (rue, place, etc.) et des références numériques correspondant aux noms des voies situées dans la zone de surveillance considérée. L'agent dispose d'un tableau donnant la correspondance entre les nombres de référence et les noms de voies publiques. La mémoire du microprocesseur 18 contient alors un tableau de correspondance entre les références numériques et les noms des voies publiques. Dans tous les cas, la localisation de l'infraction apparaît en clair sur l'écran 16, ce qui permet à l'agent de vérifier cette information. Puis celle-ci est enregistrée dans la mémoire 22.

Dans l'étape suivante, l'agent procède à une première saisie du numéro d'immatriculation. Comme le montre la figure 2, l'agent dispose de deux procédures entre lesquelles il choisit selon la nature du numéro d'immatriculation. S'il s'agit d'un numéro non standard, par exemple celui d'un véhicule étranger, l'agent doit introduire, à l'aide des touches alphanumériques du clavier 12, le numéro d'immatriculation qu'il a lu, par exemple, sur la plaque avant du véhicule. Ce numéro apparaît sur l'écran, puis il est stocké dans la mémoire 22. S'il s'agit d'un numéro standard, l'agent doit également l'introduire à l'aide des touches alphanumériques du clavier 12, mais le programme effectue des tests pour éliminer des numéros aberrants. Ces tests sont basés sur le fait que, en France, un numéro standard se compose soit de trois chiffres maximum, trois lettres et deux chiffres, soit de quatre chiffres, deux lettres et deux chiffres maximum. Les tests permettent de faire apparaître sur l'écran 16 un code erreur à chaque fois que le numéro d'immatriculation saisi ne correspond pas à une des deux configurations énoncées. Lorsqu'un numéro non aberrant a été introduit, il est stocké dans la mémoire 22. D'autres tests semblables pourraient être adaptés aux numéros d'immatriculation en vigueur dans d'autres pays.

L'étape suivante concerne la saisie de la marque du véhicule. Pour cela, l'agent verbalisateur introduit à l'aide des touches alphabétiques l'initiale de la marque du véhicule. Le programme du microprocesseur 20 fait apparaître en clair sur l'écran 16 la liste des marques mémorisées commençant par cette lettre. Puis, il introduit la deuxième lettre de la marque du véhicule à verbaliser. Il apparaît sur l'écran la liste des marques ou, le plus souvent, la marque commençant par ces deux lettres. S'il n'y a qu'une marque, celle-ci est mémorisée dans la mémoire 22. S'il y en a plusieurs, l'agent introduit successivement les lettres de la marque jusqu'à ce qu'une seule marque soit affichée. Celle-ci est alors mémorisée.

La saisie du type de véhicule se fait à l'aide des touches alphanumériques du clavier 12, puis elle est enregistrée dans la mémoire 22.

- 9 -

0208571

Le type d'infraction est entré à l'aide d'un nombre de référence qui est introduit à l'aide des touches numériques.

L'agent verbalisateur dispose d'un tableau de correspondance entre les nombres de référence et les types d'infraction externe au terminal portatif. Après l'introduction du nombre de référence, le type d'infraction est affiché en clair sur l'écran 16 à partir du tableau de correspondance contenu dans la mémoire du microprocesseur 20. Après vérification, cette information est mémorisée dans la mémoire 22.

L'agent verbalisateur saisit alors pour la deuxième fois le numéro d'immatriculation du véhicule en se référant, par exemple, à la plaque minéralogique arrière du véhicule. Le numéro est introduit à l'aide des touches alphanumériques. Le microprocesseur 18 procède alors à la comparaison entre les deux saisies du numéro minéralogique du véhicule, en comparant le numéro déjà contenu dans la mémoire avec celui qui vient d'être saisi. S'il y a identité entre les deux numéros, cela signifie que le numéro relevé doit être considéré comme correct. S'il n'y a pas identité, l'ensemble des informations déjà mémorisées relatives à ce procès-verbal est effacé de la mémoire 22, et la totalité du processus de saisie doit être recommencé jusqu'à ce qu'il y ait identité. La non identité des deux numéros peut résulter d'une erreur de saisie. Elle peut également résulter d'une erreur lors du montage des plaques d'immatriculation ou encore d'une falsification de celles-ci.

0208571

Dans la dernière étape de saisie, le microprocesseur 18 commande l'écriture dans la mémoire 22 de l'information d'heure et de date fournie par la base de temps 24. La mémoire 22 contient alors l'ensemble des informations nécessaires pour rédiger ultérieurement le procès-verbal.

L'agent verbalisateur peut faire défiler sur l'écran 18 l'ensemble des informations mémorisées. Puis il valide ces informations. Après cette validation, il n'est plus possible de modifier les informations déjà stockées dans la mémoire

Pour informer l'utilisateur du véhicule qu'il a fait l'objet d'un procès-verbal, l'agent verbalisateur colle sur le pare-brise du véhicule une vignette.

Pour saisir les informations relatives à un deuxième procès-verbal, l'agent verbalisateur n'est pas obligé de revenir à la première étape ; c'est-à-dire qu'il peut choisir de retourner dans le déroulement du programme à l'un des niveaux repérés par A-L-N ou I, selon les éléments du procès-verbal à dresser, qui restent inchangés par rapport à celui qui a été dressé précédemment. Par exemple, si la localisation du véhicule en infraction n'a pas changé, il choisit le retour au niveau I. Et le processus commence avec la première saisie du numéro d'immatriculation.

Une fois par jour, ou à des intervalles jugés convenables, les informations correspondant aux différents procès-verbaux qui sont stockées dans la mémoire 22 peuvent être transférées dans un micro-ordinateur par l'intermédiaire de la borne de

0208571

connexion 26. Ces informations sont traitées par tout moyen convenable pour éditer les avis de procès-verbaux qui seront ultérieurement expédiés aux contrevenants.

Cette transmission d'informations peut se faire par liaison filaire téléphonique ou par faisceau codé de rayonnement électromagnétique.

Un tel système d'élaboration de procès-verbaux présente de nombreux avantages par rapport à la rédaction manuscrite classique des procès-verbaux.

Le temps moyen de "rédaction" d'un procès-verbal passe de quatre minutes à une minute.

La saisie des informations est contrôlée sur le site, notamment le numéro d'immatriculation et la marque du véhicule. De plus, l'heure et la date de l'infraction sont mémorisées sans intervention de l'agent. Cela permet d'éviter une grande partie des 20% de rejets existant actuellement à l'étape du traitement informatique des procès-verbaux. Ces rejets proviennent d'un numéro minéralogique erroné, d'une date contestée, d'une marque de véhicule incompatible avec le fichier de l'administration ; etc.

De plus, l'expédition des procès-verbaux pour leur traitement est accéléré et les relances erronées de contrevenants sont évitées.

REVENDICATIONS

1. Procédé d'établissement de procès-verbaux de véhicules en stationnement irrégulier, caractérisé en ce qu'il comprend les étapes suivantes :

- pour chaque véhicule en infraction :
relever le numéro d'immatriculation du véhicule en stationnement irrégulier ;
introduire dans la mémoire d'un dispositif portable ledit numéro d'immatriculation ;
introduire dans ladite mémoire, selon un ordre prédéterminé, d'autres informations relatives à l'infraction ;
relever à nouveau ledit numéro d'immatriculation du véhicule ;
introduire ledit numéro d'immatriculation relevé à nouveau ;
provoquer, par ledit dispositif portable, la comparaison entre les deux numéros d'immatriculation effectivement introduits ;
supprimer de la mémoire l'ensemble desdites informations si les deux numéros effectivement introduits ne sont pas identiques, et les maintenir si lesdits numéros sont identiques ; et

- à intervalles, transférer lesdits ensembles d'informations mémorisées relatives à des véhicules en infraction dans des moyens de traitement externes pour élaborer les procès-verbaux eux-mêmes.

- 13 -

0208571

2. Procédé selon la revendication 1, dans lequel une desdites autres informations est la marque du véhicule, caractérisé en ce que l'introduction de la marque du véhicule contrevenant comprend les étapes suivantes :

- introduire dans ledit dispositif portable l'initiale de la marque du véhicule contrevenant ;

- afficher une liste de marques commençant par ladite initiale, lesdites marques étant prélevées parmi un ensemble de marques préchargées dans ledit dispositif ;

- si ladite liste comprend plus d'une marque, introduire successivement les lettres suivantes de la marque du véhicule jusqu'à ce que la liste affichée de marques commençant par les lettres déjà introduites ne comporte plus qu'une seule marque ; et

- mémoriser dans la mémoire dudit dispositif portable ladite marque.

3. Procédé selon l'une quelconque des revendications 1 et 2, caractérisé en ce que l'une desdites autres informations est constituée par l'heure et la date de constatation de l'infraction, et en ce que cette information est automatiquement introduire dans ladite mémoire à partir du signal délivré par une base de temps interne au dispositif portatif.

4. Dispositif portatif d'aide à l'établissement d'un procès-verbal de véhicule en stationnement irrégulier caractérisé en ce qu'il comprend :

0208571

- des moyens pour entrer dans ledit dispositif des informations ;

- des moyens pour mémoriser lesdites informations entrées selon une séquence prédéterminée comprenant une première introduction du numéro d'immatriculation d'un véhicule contrevenant, l'introduction d'autres informations relatives au stationnement irrégulier du véhicule et une deuxième introduction du numéro d'immatriculation du véhicule ;

- des moyens pour comparer les numéros effectivement entrés lors des première et deuxième introduction ;

- des moyens répondant aux moyens de comparaison, pour supprimer des moyens de mémorisation lesdites informations introduites si les deux numéros effectivement entrés sont différents, et pour les maintenir si lesdits numéros sont identiques.

- des moyens d'accès auxdits moyens de mémorisation pour prélever périodiquement les ensembles d'informations relatives aux véhicules en stationnement irrégulier, mémorisées pendant ladite période.

5. Dispositif portatif selon la revendication 4, caractérisé en ce qu'il comprend en outre une base de temps pour délivrer une information d'heure et de date présentes et des moyens pour introduire dans lesdits moyens de mémorisation ladite information d'heure et de date présentées.

## FIG. 1

0208571

FIG. 2

```
                              ◄──────── A
                    ┌──────────────┐
                    │   N° AGENT   │
                    └──────────────┘
                              ◄──────── L
                    ┌──────────────┐
                    │ LOCALISATION │
                    └──────────────┘
                              ◄──────── N
                    ┌──────────────┐
                    │   N° RUE     │
                    └──────────────┘
                              ◄──────── I
                    ╱──────────────╲
           OUI     ╱ IMMATRICULATION ╲    NON
         ┌────────│    STANDARD ?     │────────┐
         │         ╲──────────────╱             │
         │                                      │
  ┌──────────────┐                      ┌──────────────┐
  │IMMATRICULATION│                      │IMMATRICULATION│
  └──────────────┘                      └──────────────┘
         │                                      │
        ╱──────────╲                            │
  OUI  ╱  IMMAT. ABERRANT. ╲                     │
┌─────│       ?            │                     │
│      ╲──────────╱                              │
│            │ NON                               │
│            └──────────────┬────────────────────┘
│                           │
│                   ┌──────────────┐
│                   │    MARQUE    │
│                   └──────────────┘
│                   ┌──────────────┐
│                   │    TYPE      │
│                   │   VEHICULE   │
│                   └──────────────┘
│                   ┌──────────────┐
│                   │    TYPE      │
│                   │  D'INFRACTION│
│                   └──────────────┘
│                   ┌──────────────┐
│                   │IMMATRICULATION│
│                   └──────────────┘
│                           │
│            ╱──────────────╲
│     OUI   ╱  2 NUMEROS      ╲   NON    ┌──────────────┐
│   ┌──────│   IDENTIQUES     │─────────│  EFFACEMENT  │──▲
│   │       ╲──────────────╱             └──────────────┘
│   │
│   ┌──────────────┐
│   │ DATE - HEURE │
│   └──────────────┘
│   ┌──────────────┐
│   │  VALIDATION  │
│   └──────────────┘
```

**RAPPORT DE RECHERCHE EUROPEENNE**

Numéro de la demande **0208571**

EP 86 40 1194

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | US-A-4 379 334 (FEAGINS et al.) <br> * Abrégé; colonne 5, ligne 43 - colonne 6, ligne 49; revendications 8-10; figures * <br> --- | 1,4,5 | G 06 F 3/02 <br> G 07 C 11/00 |
| A | US-A-3 999 050 (PITRODA) <br> * Abrégé; colonne 1, ligne 63 - colonne 3, ligne 17; figures 1-3 * <br> --- | 1,4,5 | |
| A | US-A-4 125 871 (MARTIN) <br> * Abrégé; colonne 1, lignes 28-68; figures * <br> --- | 1,4 | |
| A | US-A-4 458 238 (LEARN) <br> * Abrégé; revendications; figures * <br> --- | 1,4 | DOMAINES TECHNIQUES RECHERCHES (Int Cl 4) |
| A | US-A-4 007 443 (BLOMBERG et al.) <br> * Abrégé; figures * <br> --- | 1,4 | G 07 B <br> G 07 C <br> G 07 F <br> G 06 F |
| A | US-A-4 133 034 (ETTER) <br> * Abrégé; figures * <br> ----- | 1,4 | |

Le present rapport de recherche a été établi pour toutes les revendications

| Lieu de la recherche <br> LA HAYE | Date d'achèvement de la recherche <br> 19-09-1986 | Examinateur <br> MEYL D. |
|---|---|---|